# EUROPÄISCHE PATENTSCHRIFT

(11) **EP 1 101 519 B1**
(45) Veröffentlichungstag und Bekanntmachung des Hinweises auf die Patenterteilung: **19.04.2006**
(21) Anmeldenummer: 00122402.1
(22) Anmeldetag: 13.10.2000
(51) Int. Cl.: B01D 35/18, B01D 27/08

(54) **Kraftstofffilter**
Fuel filter
Filtre à carburant

(30) Priorität: 17.11.1999 DE 19955206
(43) Veröffentlichungstag der Anmeldung: 23.05.2001
(73) Patentinhaber: Mann + Hummel GmbH, 71638 Ludwigsburg (DE)
(72) Erfinder: Rösgen, André, 73630 Remshalden (DE)
(74) Vertreter: Voth, Gerhard

(56) Entgegenhaltungen:
- EP-A- 0 285 416
- EP-A- 0 400 223
- EP-A- 0 937 490
- DE-A- 3 716 142
- GB-A- 2 115 305
- US-A- 3 235 084
- US-A- 4 437 986
- US-A- 4 522 712
- US-A- 4 539 108
- US-A- 4 585 924
- US-A- 4 844 793
- US-A- 5 084 170

## Beschreibung

Die Erfindung betrifft einen Kraftstofffilter nach dem Oberbegriff des Patentanspruches 1.

Es ist aus der DE 38 29 126 ein Kraftstofffilter bekannt, welcher über einen Filterkopf mit einem Kraftstoffeinlaß und -auslaß, eine Filterpatrone und eine Kraftstoffheizung verfügt. Die Kraftstoffheizung dient der Erwärmung des, durch den Kraftstofffilter fließenden Kraftstoffes wie Dieselkraftstoff. Dieselkraftstoffe enthalten Bestandteile, wie z.B. Paraffine, die bei tieferen Temperaturen ab 0°C zähflüssig bzw. fest werden, so daß der Dieselkraftstoff eine breiartige Konsistenz annimmt. Dies hat zur Folge, daß sich das Kraftstofffilterelement, welches üblicherweise in dem Kraftstofffilter zwischen dem Kraftstofftank und dem Motor in der Kraftstoffleitung angeordnet ist, zusetzen und verstopfen kann, wodurch der Motor keinen Kraftstoff mehr erhält und aus geht.

Damit der Dieselkraftstoff flüssig bleibt und das Kraftstofffilterelement nicht zusetzt, ist eine Widerstandsheizung vorgesehen, welche in dem Filterkopf angeordnet ist. Diese Widerstandsheizung wird über einen Halbleiter-Leistungsschalter betätigt und enthält ein Heizelement, welches als PTC-Element (Element mit positivem Temperaturkoeffizienten) ausgebildet ist. Der Widerstand des PTC-Elementes steigt bei Überschreiten eines Temperatur-Schwellwertes sprunghaft an. Um eine Überhitzung des PTC-Elementes zu verhindern, ist ein in Reihe geschalteter Leistungsschalter vorgesehen, der den maximalen Durchfluß des elektrischen Stromes begrenzt.

Zur Steuerung des PTC-Elementes ist eine Steuer- und Versorgungsschaltung notwendig, die über ein temperaturempfindliches Element verfügt. Dieses temperaturempfindliche Element kann ein Bi-Metall oder ein Heißleiter sein. Diese Bauteile benötigen jedoch ein Einbauvolumen in dem Kraftstofffilter, wodurch der Einbauraum des Kraftstofffilters vergrößert wird.

Wie allgemein bekannt ist, darf Dieselkraftstoff nicht über 175°C erhitzt werden, da bei diesem Punkt die Dampfblasenbildung einsetzt, was zu einer Verschlechterung des Verbrennungsvorganges führt.

PTC-Elemente können jedoch Oberflächentemperaturen von 200°C erreichen, wodurch der Dieselkraftstoff, der direkt mit dem PTC-Element in Kontakt kommt, über seinen kritischen Punkt von 175°C erhitzt wird und sich dadurch Dampfblasen bilden. Außerdem ist die Leistung der PTC-Elemente abhängig von dem Volumenstrom und der Temperatur des Kraftstoffes.

Das Dokument EP 0 400 223 offenbart einen Dieselfilter mit einer in den Kopf integrierten Heizung. Die Heizung ist als scheibenförmige PTC-Heizung ausgeführt. Beim Einströmen eines kalten Dieselkraftstoffs in den Kopf wird ein Thermoschalter betätigt, welcher die Heizung einschaltet. Der Kraftstoff wird durch die Heizung erwärmt bevor er auf das Filterelement auftrifft. Sobald der Kraftstoff eine vorgegebene Temperatur überschreitet, wird die Heizung abgeschaltet.

Das Dokument GB 2 115 305 offenbart einen Kraftstofffilter. In dem Kraftstofffilter ist eine Heizung angeordnet, welche den Kraftstoff erwärmt. Die Heizung verfügt über eine Trägerschicht und eine auf die Trägerschicht aufgebrachte Heizschlange. Die Heizschlange ist mit einer Deckschicht überzogen, wodurch die Heizschlange elektrisch isoliert ist.

Das Dokument US 4,844,793 offenbart eine Kraftstoffheizung, wobei das Heizelement durch ein PTC-Material gebildet ist. Dieses PTC-Material ist mit einem elektrisch leitfähigen Material überzogen.

Aufgabe der Erfindung ist es daher, einen Kraftstofffilter mit einer Heizung zu schaffen, wobei die Heizung nur einen kleinen Einbauraum benötigt und dabei eine gute Wärmeübertragung auf den Kraftstoff ermöglicht, wobei keine zu hohe Oberflächentemperatur erzeugt werden soll.

Diese Aufgabe wird durch die Merkmale des Patentanspruches 1 gelöst.

Der erfindungsgemäße Kraftstofffilter ist in vorteilhafter Weise geeignet, Kraftstoff, insbesondere Dieselkraftstoff und Biodiesel (RME/PME), zu erwärmen und dadurch auch bei Temperaturen des Kraftstoffes ab 5°C oder kälter eine Filtration des Kraftstoffes und die Versorgung eines Motors mit Kraftstoff zu gewährleisten, wobei zur Erwärmung des Kraftstoffes eine Heizung vorgesehen ist, welche nur einen kleinen Einbauraum benötigt und Oberflächentemperaturen von maximal 120°C erzeugt.

Hierzu weist der Kraftstofffilter einen Filterkopf und einen Filterbehälter auf, welche dichtend miteinander verbunden sind und gemeinsam ein Filtergehäuse bilden. Weiterhin weist der Kraftstofffilter einen Kraftstoffeinlaß, einen Kraftstoffauslaß, ein Filtermedium und eine Heizung auf. Der Filterkopf kann z.B. als Deckel verwendet werden, ohne weitere Funktionen zu erfüllen oder zur Befestigung des Kraftstofffilters an dafür vorgesehenen Bauteile dienen. Außerdem kann der Kraftstoffeinlaß und/oder der Kraftstoffauslaß in den Filterkopf integriert sein. Der Kraftstoffeinlaß und der Kraftstoffauslaß kommunizieren mit einem, durch das Filtergehäuse gebildeten Gehäusevolumen. Das Filtermedium teilt das Gehäusevolumen in eine Rohseite und eine, dichtend davon getrennte Reinseite auf. Der Kraftstoffeinlaß kommuniziert mit der Rohseite und der Kraftstoffauslaß mit der Reinseite.

Die Heizung ist auf der Rohseite des Kraftstofffilters angeordnet, damit der Kraftstoff erwärmt wird, bevor er durch das Filtermedium tritt. Hierzu kann die Heizung an dem Filterkopf oder dem Filterbehälter auf der Rohseite angeordnet sein. Es ist auch denkbar, daß mehrere Heizungen in den Kraftstofffilter integriert sind. Hierbei kann eine erste Heizung an einem Filterbehälterboden und eine zweite Heizung an dem Filterkopf angeordnet sein. Weiterhin können mehrere z.B. drei oder vier Heizungen an einer Filterbehälterwand, welche auch über Ecken verlaufen kann, verteilt angeordnet sein. Die Heizung kann außer zur Erwärmung des Kraftstoffes auch zur Erwärmung von abgeschiedenem Wasser, welches sich in dem Filterbehälterboden sammelt verwendet werden.

Die Heizung weist mindestens einen Wärmeübertragungskörper, eine Trägerschicht, eine Heizschlange, einen Flansch und Kontakte für eine Spannungsversorgung auf. Der Wärmeübertragungskörper besitzt mindestens eine ebene Fläche, auf welche die Trägerschicht aufgebracht ist. Damit sich die Trägerschicht nicht durch die, durch die Heizschlange erzeugte Wärme zersetzt, wird die Trägerschicht durch ein thermisch stabiles Material z. B. aus Keramik oder Metall gebildet. Außerdem darf die Trägerschicht keinen Kurzschluß in der Heizschlange verursachen, wodurch das thermisch stabile Material zusätzlich noch elektrisch isolierende Eigenschaften besitzen muß, außerdem muß die Trägerschicht eine gute Wärmeübertragungseigenschaft aufweisen, da die, durch die Heizschlange erzeugte Wärme über die Trägerschicht an den Wärmeübertragungskörper übertragen werden muß. Hierzu kann die Trägerschicht z.B. aus einer Keramikschicht, einem Kunststoffharz oder einem Kleber bestehen. Die Heizschlange kann als eigenständiges Bauteil auf die Trägerschicht aufgebracht werden oder z.B. im Siebdruckverfahren auf die Trägerschicht aufgetragen sein. Die Heizschlange kann in beliebigen Verläufen auf die Trägerschicht aufgetragen sein, wobei eine möglichst große Heizfläche auf der ebenen Fläche des Wärmeübertragungskörpers angestrebt wird. Die Heizfläche wird durch die Anordnung der Heizschlange beeinflußt. Die Heizschlange kann z.B. lamellenförmig, spiralartig, kreisförmig oder eckig angeordnet sein.

Der Flansch dient zur Befestigung und Fixierung der Heizung an dem Kraftstofffilter. Wird die Heizung von außen in das Filtergehäuse eingesteckt, so ist eine Dichtung zwischen dem Bereich, der in die Rohseite hinein ragt und dem Bereich, der aus dem Kraftstofffilter heraus ragt vorzusehen, damit kein Kraftstoff aus dem Kraftstofffilter austreten kann. Wird die Heizung ausschließlich im Innern des Kraftstofffilters angebracht, so kann eine Dichtung entfallen. Der Flansch kann zur Befestigung an dem Filtergehäuse z.B. ein Gewinde, Befestigungsbohrungen, einen Bajonettverschluß oder Aufnahmen für Spannhaken oder Clipse aufweisen.

Weiterhin weist die Heizung Kontakte für eine Spannungsversorgung auf. Diese Kontakte können durch zwei Kabel gebildet werden, welche mit einer Spannungsquelle verbindbar sind. Außerdem können die Kontakte in einen Stecker integriert sein, welcher nach Kundenwunsch variiert werden kann. Über die Kontakte kann die Heizung z.B. über den Bordcomputer angesteuert werden. Der Bordcomputer kann z.B. über Sensoren diverse Daten wie z.B. Motordaten, Außentemperatur, Kraftstofftemperatur erfassen und dementsprechend die Heizung ein- oder ausschalten.

Eine vorteilhafte Ausgestaltung des Erfindungsgedankens sieht die Anordnung der Heizung in dem Kraftstoffeinlaß vor, da der Kraftstoff noch vor dem ersten Kontakt mit dem Filtermedium erwärmt wird und an dieser Stelle der engste Querschnitt vor dem Filtermedium besteht, wodurch der Kraftstoff am besten Erwärmt werden kann.

Eine besondere Ausführungsform der Heizung besteht in der Verwendung eines stabförmigen Wärmeübertragungskörpers. Durch diese Ausführung weist der Wärmeübertragungskörper eine Projektionsfläche auf, welche eine schmälere Breite im Verhältnis zur Länge besitzt. Durch eine derartige Ausführung kann die Heizung eine große ebene Fläche aufweisen und in einen langen, schmalen Kanal integriert werden.

Eine weitere Ausgestaltung der Erfindung sieht eine halbkreisförmige Querschnittsfläche des Wärmeübertragungskörpers vor. Hierbei entspricht die ebene Fläche in ihrer der Breite dem Durchmesser des halbkreisförmigen Querschnitts und zur Wärmeübertragung steht eine größere Oberfläche, entlang dem Kreisbogen des Querschnitts zur Verfügung.

Gemäß einer weiteren Ausgestaltung der Erfindung ist mindestens eine Rippe vorgesehen, welche sich parallel zu einer Längsachse des stabförmigen Wärmeübertragungskörpers erstreckt. Durch die Verwendung einer Rippe wird die zur Wärmeübertragung nutzbare Oberfläche vergrößert. Werden mehrere Rippen verwendet, so vergrößert sich die Oberfläche, die zur Wärmeübertragung genutzt wird.

Es ist vorteilhaft, eine Elektronik zur Steuerung der Heizung auf die ebene Fläche aufzubringen. Hierbei ist die Heizung unabhängig von externen Steuerungen oder Bordcomputern. Die Elektronik kann z.B. auf der Trägerschicht verlötet oder verklebt sein.

Eine weitere Variante der Erfindung sieht ein Mittel zur Erfassung einer vorhandenen Kraftstofftemperatur vor. Dieses Mittel kann z. B. ein Bi-Metallschalter sein, welcher die Heizung ein- und ausschaltet.

Eine besondere Ausführung des Mittels zur Erfassung der Kraftstofftemperatur besteht in der Verwendung eines PTC-Elementes, welche entsprechend der Kraftstofftemperatur die Heizung ein- oder ausschaltet und dabei nur ein sehr geringes Körpervolumen aufweist. Entsprechend vorgegebenen Sollwerten schaltet der elektronische Schalter ein oder aus.

Gemäß einer weiteren Ausgestaltung der Erfindung enthält die Heizung zwei Wärmeübertragungskörper, welche mit ihren ebenen Flächen aufeinander angeordnet sind und eine gemeinsame Heizschlange aufweisen. Hierzu weist der erste Wärmeübertragungskörper die Trägerschicht und die Heizschlange auf und der zweite Wärmeübertragungskörper ist entweder direkt ohne oder mit Trägerschicht auf die Heizschlange aufgebracht und mit dem ersten Wärmeübertragungskörper verbunden. Dadurch erwärmt eine einzige Heizschlange zwei Wärmeübertragungskörper, wodurch die erzeugte Wärme besser auf den Kraftstoff übertragen wird.

Es ist vorteilhaft, die ebene Fläche mit allen darauf aufgebrachten Elementen wie z.B. PTC-Element, Elektronik, Widerstände und Heizschlange mit einer Schutzschicht zu überziehen, damit der Kraftstoff nicht in direkten Kontakt mit diesen Elementen kommt und diese zerstört. Die Schutzschicht besteht aus einem Material, das von dem Kraftstoff nicht zerstört wird und außerdem temperaturbeständig gegen die, durch die Heizschlange erzeugte Wärme ist. Weiterhin darf das Material der Schutzschicht die aufgebrachten Elemente nicht angreifen. Vorteilhafterweise leitet das Material ebenfalls die Wärme an den Kraftstoff weiter. Die Schutzschicht kann z.B. aus einem Zwei-Komponenten-Kleber bestehen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Weitere Einzelheiten der Erfindung werden nachfolgend anhand der Zeichnungen erläutert.

Hierbei zeigt
- Figur 1: einen Kraftstofffilter im Schnitt
- Figur 2: eine Heizung in der Draufsicht,
- Figur 3: eine Heizung in der Seitenansicht,
- Figur 4: eine Querschnittsfläche eines Wärmeübertragungskörper,
- Figur 5: eine Querschnittsfläche eines Wärmeübertragungskörper und
- Figur 6: eine Querschnittsfläche eines Wärmeübertragungskörper

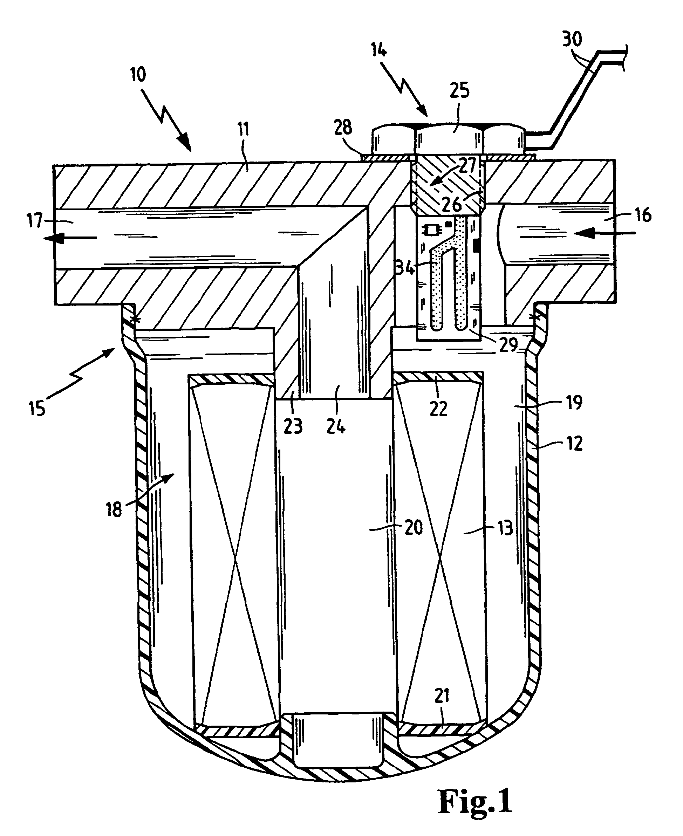

In Figur 1 ist ein Kraftstofffilter 10 im Schnitt dargestellt. Der Kraftstofffilter 10 weist einen Filterkopf 11, einen Filterbehälter 12, ein Filterelement 13 und eine Heizung 14 auf. Der Filterkopf 11 weist einen Kraftstoffeinlaß 16 und einen Kraftstoffauslaß 17 auf und ist dichtend durch z.B. Verpressen, Verschrauben oder Verschnappen mit dem Filterbehälter 12 verbunden, wodurch ein Filtergehäuse 15 gebildet wird. Das Filtergehäuse 15 umschließt ein Filtergehäusevolumen 18, wobei das Filterelement 13 in dem Filtergehäusevolumen 18 angeordnet ist und eine Rohseite 19 dichtend von einer Reinseite 20 trennt. Die Rohseite 19 kommuniziert mit dem Kraftstoffeinlaß 16 und die Reinseite 20 kommuniziert mit dem Kraftstoffauslaß 17. Das Filterelement 13 liegt mit einer unteren Endscheibe 21 dichtend an dem Filterbehälter 12 und mit einer oberen Endscheibe 22 dichtend an einem Stutzen 23 an. Der Stutzen 23 ist an den Filterkopf 11 angeformt und umschließt eine Verbindungsleitung 24, welche mit dem Kraftstoffauslaß 17 verbunden ist.

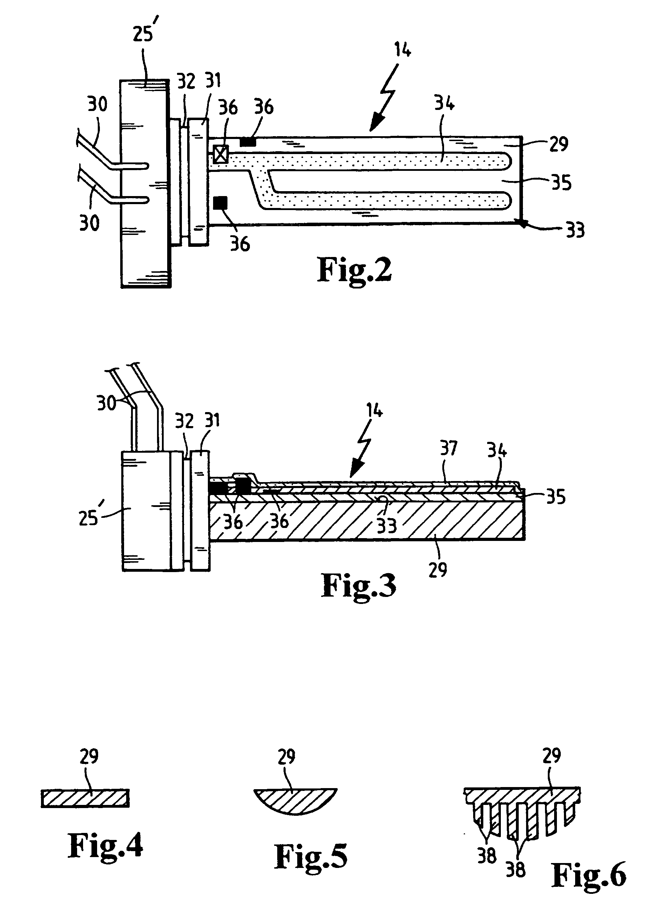

In den Filterkopf 11 ist eine Heizung 14 eingebracht. Diese Heizung 14 ist bei dieser Ausführung mit dem Filterkopf 11 dichtend verschraubt. Hierzu weist die Heizung 14 einen Flansch 25 auf, der als Sechskant ausgeführt ist. An diesen Flansch 25 schließt ein Gewindebereich 26 an, der in ein Gewinde 27 eingeschraubt ist. Zur Abdichtung der Heizung 14 ist eine Flachdichtung 28 zwischen den Flansch 25 und den Filterkopf 11 eingebracht. An den Gewindebereich 26 schließt sich ein Wärmeübertragungskörper 29 an. Dieser wird anhand der Figuren 2 und 3 näher erläutert. Durch den Flansch 25 sind Kontaktkabel 30 geführt, welche mit den elektronischen Bauteilen der Heizung 14 verbunden sind. Diese Kontaktkabel 30 können z.B. mit einem Stecker verbunden oder direkt mit einer Spannungsquelle verbunden sein durch z.B. Löten.

Sobald der Kraftstoff durch den Kraftstoffeinlaß 16 in den Kraftstofffilter 10 einströmt, wird der Kraftstoff bei einer Kraftstofftemperatur unter z.B. 5°C durch die Heizung 14 erwärmt. Die Erwärmung des Kraftstoffes erfolgt im Vorbeiströmen des Kraftstoffes an der Heizung 14. Somit wird der Kraftstoff verflüssigt und setzt das Filterelement 13 nicht zu. Dadurch wird ein, dem Kraftstofffilter 10 nachgeordneter Motor zuverlässig mit Kraftstoff versorgt.

In Figur 2 ist die Heizung 14 in der Draufsicht dargestellt. Bei dieser Ausführung ist der Flansch 25' als Rechteckplatte ausgeführt, welche Befestigungsbohrungen (nicht dargestellt) aufweist. An den Flansch schließt sich ein Dichtbereich 31 an. Dieser Dichtbereich 31 besitzt eine Nut 32, in welche ein Dichtungsring (nicht dargestellt) eingelegt werden kann. Dieser Dichtungsring bildet mit einer Aufnahmebohrung (nicht dargestellt) in dem Filterkopf 11 gemäß Figur 1 eine dichte Verbindung.

Der Wärmeübertragungskörper 29 weist eine ebene Fläche 33 auf, auf welche eine Trägerschicht35 mit einer Heizschlange 34 aufgebracht ist. Weiterhin sind elektronische Bauteile 36 auf der Trägerschicht35 angeordnet. Die elektronischen Bauteile 36 können z.B. eine Elektronik zur Auswertung eines PTC-Elementes zur Ermittlung der Kraftstofftemperatur, Widerstände oder Chips sein.

In Figur 3 ist eine Heizung 14 in der Seitenansicht dargestellt. Hierbei ist der Flansch 25' wie in Figur 2 beschrieben ein Rechteck. An den Flansch 25' schließt sich der Dichtbereich 31 an, an welchen sich wiederum der Wärmeübertragungskörper 29 anschließt. Auf den Wärmeübertragungskörper 29 aus z.B. Aluminium ist die Trägerschicht35 aufgebracht, welche durch eine Keramik-Hybrid-Schicht gebildet wird. Auf diese Trägerschicht35 sind die elektronischen Bauteile 36 und die Heizschlange 34 aufgebracht. Über diesen Komponenten 36, 34 ist eine Schutzschicht 37 angeordnet. Diese überdeckt dichtend alle Komponenten 34, 36, damit der Kraftstoff diese Komponenten 34, 36 nicht zerstört.

In Figur 4 ist eine rechteckige Querschnittsfläche des Wärmeübertragungskörper 29 dargestellt.

In Figur 5 ist eine halbkreisförmige Querschnittsfläche des Wärmeübertragungskörpers 29 dargestellt.

In Figur 6 ist eine Querschnittsfläche des Wärmeübertragungskörpers 29 mit Rippen 38 dargestellt.

## Patentansprüche

1. Kraftstofffilter, insbesondere für Dieselmotoren, aufweisend zumindest
- einen Filterkopf (11),
- einen Filterbehälter (12), welcher mit dem Filterkopf (11) dichtend verbunden ist und ein Filtergehäuse (15) bildet,
- einen Kraftstoffeinlaß (16) und einen Kraftstoffauslaß (17), welche mit dem Filtergehäuse (15) kommunizieren,
- ein Filtermedium (13), welches in dem Filtergehäuse (15) angeordnet ist und eine Rohseite (19) von einer Reinseite (20) dichtend trennt und
- eine Heizung (14), wobei
die Heizung (14) durch mindestens
- einen Wärmeübertragungskörper (29) mit mindestens einer ebenen Fläche,
- eine auf die ebene Fläche aufgebrachte, thermisch stabile Trägerschicht (35), insbesondere eine Keramik-Hybrid-Schicht,
- eine auf die Trägerschicht (35) aufgebrachte Heizschlange (34),
- einen Flansch (25), welcher zur Fixierung der Heizung (14) in dem Kraftstofffilter (10) dient und
- Kontakte (30) für eine Spannungsversorgung gebildet wird,
**dadurch gekennzeichnet, dass** zusätzlich zu der Heizschlange (34) elektronische Bauteile (36) auf der Trägerschicht (35) angeordnet sind und die ebene Fläche mit allen aufgebrachten Elementen (34, 36) mit einer Schutzschicht (37) überzogen ist.

2. Kraftstofffilter nach Anspruch 1, **dadurch gekennzeichnet, daß** die Heizung (14) in dem Kraftstoffeinlaß (16) angeordnet ist.

3. Kraftstofffilter nach Anspruch 1 oder 2, **dadurch gekennzeichnet, daß** der Wärmeübertragungskörper (29) als Stab ausgeführt ist.

4. Kraftstofffilter nach Anspruch 3, **dadurch gekennzeichnet, dass** der Wärmeübertragungskörper (29) eine halbkreisförmige Querschnittfläche aufweist.

5. Kraftstofffilter nach einem der Ansprüche 3 oder 4, **dadurch gekennzeichnet, daß** der Wärmeübertragungskörper (29) mindestens eine Rippe (38) zur Wärmeübertragung aufweist, welche parallel zur Längsachse des Stabes angeordnet ist.

6. Kraftstofffilter nach einem der vorangehenden Ansprüche, **dadurch gekennzeichnet, daß** die Heizung (14) ein Mittel zur Erfassung einer vorhandenen Kraftstofftemperatur aufweist.

7. Kraftstofffilter nach Anspruch 6, **dadurch gekennzeichnet, daß** das Mittel zur Erfassung der Kraftstofftemperatur ein PTC-Element ist.

8. Kraftstofffilter nach einem der vorangehenden Ansprüche, **dadurch gekennzeichnet, daß** die Heizung (14) über zwei Wärmeübertragungskörper (29) verfügt, wobei die Wärmeübertragungskörper (29) mit ihren ebenen Flächen aufeinander angeordnet sind und eine gemeinsame Heizschlange (34) aufweisen.

## Claims

1. Fuel filter, more especially for diesel engines, said fuel filter including at least
- one filter head (11),
- a filter container (12), which is sealingly connected to the filter head (11) and forms a filter housing (15),
- a fuel inlet (16) and a fuel outlet (17), which communicate with the filter housing (15),
- a filtering medium (13), which is disposed in the filter housing (15) and separates an unfiltered side (19) from a filtered side (20) in a sealing manner and
- a heating means (14), wherein
the heating means (14) is formed by at least
- one heat transferring body (29) with at least one planar surface,
- a thermally stable supporting layer (35), more especially a ceramic-hybrid layer, that is applied to the planar surface,
- a heating coil (34) that is applied to the supporting layer (35),
- a flange (25), which is for securing the heating means (14) in the fuel filter (10), and
- contacts (30) for a power supplying means,
**characterised in that** in addition to the heating coil (34) electronic components (36) are disposed on the supporting layer (35) and the planar surface with all the elements (34, 36) applied thereto is covered with a protective layer (37).

2. Fuel filter according to claim 1, **characterised in that** the heating means (14) is disposed in the fuel inlet (16).

3. Fuel filter according to claim 1 or 2, **characterised in that** the heat transferring body (29) is in the form of a rod.

4. Fuel filter according to claim 3, **characterised in that** the heat transferring body (29) includes a semi-circular cross-sectional area.

5. Fuel filter according to one of claims 3 or 4, **characterised in that** the heat transferring body (29) includes at least one rib (38) for the heat transfer, said rib being disposed parallel to the longitudinal axis of the rod.

6. Fuel filter according to one of the preceding claims, **characterised in that** the heating means (14) includes a means for detecting an existing temperature of a fuel.

7. Fuel filter according to claim 6, **characterised in that** the means for detecting the temperature of a fuel is a positive temperature coefficient (PTC) element.

8. Fuel filter according to one of the preceding claims, **characterised in that** the heating means (14) has two heat transferring bodies (29), wherein the heat transferring bodies (29) are disposed with their planar surfaces against each other and include a common heating coil (34).

## Revendications

1. Filtre à carburant, destiné notamment aux moteurs Diesel, composé d'au moins
- une tête de filtre (11),
- un logement de filtre (12) raccordé de manière étanche à la tête de filtre (11) et formant un boîtier de filtre (15),
- une arrivée de carburant (16) et une sortie de carburant (17) communicant avec le boîtier de filtre (15),
- un milieu filtrant (13) disposé dans le boîtier de filtre (15) et séparant de manière étanche un côté brut (19) d'un côté propre (20), et
- un dispositif de chauffage (14),
ce dispositif de chauffage (14) comportant au moins
- un corps de transfert de chaleur (29) présentant au moins une surface plane,
- une couche support (35) thermiquement stable appliquée sur la surface plane, notamment une couche hybride en céramique,
- un serpentin chauffant (34) appliqué sur la couche support (35),
- une bride (25) pour à fixer le dispositif de chauffage (14) dans le filtre à carburant (10), et
- des contacts (30) permettant une alimentation électrique,
**caractérisé en ce que**
des composants électroniques (36), en sus du serpentin chauffant (34), sont disposés sur la couche support (35), et la surface plane avec tous les éléments rapportés (34, 36) est recouverte d'une couche protectrice (37).

2. Filtre à carburant selon la revendication 1,
**caractérisé en ce que**
le dispositif de chauffage (14) est logé dans l'arrivée de carburant (16).

3. Filtre à carburant selon la revendication 1 ou 2,
**caractérisé en ce que**
le corps de transfert de chaleur (29) est une tige.

4. Filtre à carburant selon la revendication 3,
**caractérisé en ce que**
le corps de transfert de chaleur (29) a une section semi-circulaire.

5. Filtre à carburant selon l'une des revendications 3 ou 4,
**caractérisé en ce qu'**
au moins une nervure (38) permettant le transfert de chaleur est disposée parallèlement à l'axe longitudinal du corps de transfert de chaleur (29).

6. Filtre à carburant selon l'une des revendications précédentes,
**caractérisé en ce que**
le dispositif de chauffage (14) présente un moyen de saisie de la température du carburant.

7. Filtre à carburant selon la revendication 6,
**caractérisé en ce que**
le moyen de saisie de la température du carburant est un élément à coefficient de température positif (CTP).

8. Filtre à carburant selon l'une des revendications précédentes,
**caractérisé en ce que**
le dispositif de chauffage (14) se compose de deux corps de transfert de chaleur (29), disposés l'un sur l'autre par leur surface plane et le serpentin de chauffage (34) leur est commun.
